(19) Europäisches Patentamt
European Patent Office
Office européen des brevets

(11) **EP 2 743 485 B1**

(12) **EUROPEAN PATENT SPECIFICATION**

(45) Date of publication and mention
of the grant of the patent:
**06.07.2016 Bulletin 2016/27**

(51) Int Cl.:
*F02D 41/14* (2006.01)    *F02D 29/02* (2006.01)
*G07C 5/00* (2006.01)

(21) Application number: **13197847.0**

(22) Date of filing: **17.12.2013**

(54) **Method for determining the state of a vehicle by means of inertial sensors, system for implementing said method which can be installed on-board a vehicle and telematic platform comprising such a system**

Verfahren zur Bestimmung des Zustandes eines Fahrzeuges mithilfe von Trägheitssensoren, System zur Implementierung des besagten, an Bord eines Fahrzeugs installierbaren Verfahrens und telematische Plattform mit solch einem System

Procédé de détermination de l'état d'un véhicule au moyen de capteurs inertiels, système pour la mise en oeuvre de ce procédé qui peut être installé à bord d'un véhicule et plateforme télématique comprenant un tel système

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2012 IT TO20121087**

(43) Date of publication of application:
**18.06.2014 Bulletin 2014/25**

(73) Proprietor: **Magneti Marelli S.p.A.**
**20011 Corbetta (MI) (IT)**

(72) Inventors:
• **De Tommasi, Claudio**
**I-10078 VENARIA REALE (Torino) (IT)**
• **Bergamini, Alessandro**
**I-10078 VENARIA REALE (Torino) (IT)**

(74) Representative: **Deambrogi, Edgardo et al**
**Corso Emilia 8**
**10152 Torino (IT)**

(56) References cited:
**EP-A1- 1 978 490     WO-A2-2012/135328**
**FR-A1- 2 951 324     US-A1- 2004 178 896**

**Description**

The present invention relates in general to recognition of the state of a vehicle and more specifically recognition of the state of the thermal engine of a vehicle.

The state of the vehicle, namely the operating state of the engine, represents an important piece of information since the powering of an increasingly large number of on-board electronic devices, including assisted-steering devices, communication and entertainment devices or comfort and utility devices, is dependent thereon. During the operating condition of a thermal engine the devices may be powered by the battery or the alternator of the vehicle, whereas, when the thermal engine is not in operation, the devices must be powered independently by means of their own battery, or the power supply obtained via the vehicle battery must be constantly monitored in order to avoid an excessive consumption of the battery power which is to be used for restarting the engine.

By way of example, an on-board telematic platform comprising a navigation system and a radio communication system may be conveniently active in the case where the vehicle engine is in operation, in which condition it may be assumed that the vehicle is in movement and that the driver may make use of the on-board navigation system or the radio communication system for making telephone calls without being distracted from driving, while it may be deactivated in the case where the vehicle engine is not in operation, in which condition it may be assumed that the vehicle is parked.

An on-board electronic device, in particular if equipped with an independent battery, must optimize the power consumption and it is extremely convenient if it is able to manage its own functions depending on the state of the vehicle.

The vehicles may incorporate, from the production stage, on-board electronic devices, whose activation and powering is controlled owing to a physical connection to the key signal or to the CAN bus. If these devices are not provided at the time of production of the vehicle, they may be advantageously mounted subsequently, in the form of aftermarket accessories. In this latter case, however, it is not always possible or convenient to use a physical connection with the key signal or the CAN bus.

EP 1,978,490 in the name of the same Applicant teaches recognizing the operating state of a thermal engine of a vehicle by means of detection of an acoustic sound signal and, optionally, a mechanical vibration signal associated with the vehicle.

The object of the present invention is to provide a satisfactory solution for the problem of controlling activation and deactivation of on-board electronic devices depending on the state of a vehicle in the absence of a physical connection with an on-board signal indicating the operating state of the thermal engine.

According to the present invention this object is achieved by means of a method for determining the state of a vehicle and controlling operation of an on-board electronic device, having the characteristic features defined in Claim 1.

Particular embodiments form the subject of the dependent claims, the contents of which are to be understood as forming an integral part of the present description.

The invention relates furthermore to a system for determining the state of a vehicle and controlling operation of an on-board electronic device of said vehicle, and a telematic platform comprising such a system, as claimed.

In short, the present invention is based on the principle of envisaging the arrangement of sensor means on-board a vehicle, which are situated at a distance from or incorporated in an on-board electronic device, whose activation and deactivation is to be controlled, and which are mechanically integral with the vehicle. These sensor means comprise, for example, an inertial sensor device, such as a position sensor (gyroscope) or a movement sensor (accelerometer), or a plurality of sensors, of a similar or different type, arranged in a convenient spatially oriented relationship and adapted to emit signals indicating an observed variable or variations thereof over time. In the case of sensors incorporated in an on-board electronic device, the device itself must be integral with the vehicle in its installed condition.

A programmed processing and control unit is adapted to receive signals from the sensor means, indicating the presence or absence of vibrations of the engine, and interpret these signals as signals representing a state of actuation of the engine. The processing and control unit is arranged to emit signals for controlling on-board electronic devices, in particular command signals for activation or deactivation of the controlled devices, singly, simultaneously, in succession in a predefined order of priority, or in other predetermined modes, depending on the state of the vehicle detected by the sensor means.

The system for determining the state of a vehicle, including the sensor means and the processing and control unit, is preferably arranged to take a low-power standby condition in which both the sensors means and the processing and control unit are inactive, although sensitive to predefined wake-up conditions; a first operating condition for checking the state of the vehicle, in which the sensor means and the processing and control unit are active, in which the sensor means detect, periodically or continuously, the variable observed or its variations over time and the processing and control unit performs a programmed procedure for processing the signals received from the sensor means within a predetermined time span, respectively, in order to determine the occurrence of a transition of the state of the vehicle (from a non-operative state of the engine to an operative state of the engine, hereinafter referred to in short as "OFF-ON transition"); and a second operating condition for operating the controlled electronic devices, in which the sensor means and the processing and control unit are active, in which the sensor means detect periodically or continuously, the variable observed or its variations over time and the processing and control unit emit command signals for activating the controlled electronic devices and performs a programmed procedure for processing the signals received from the sensor means within a predetermined time span, respectively, in order to determine the occurrence of a transition of the state of the vehicle (from an operative engine state to a non-operative engine state, hereinafter referred to in short as: "ON-OFF transition).

An on-board telematic platform comprises (or is associated with) a system for determining the state of a vehicle as described, adapted to provide control signals for activating or deactivating the platform depending on the state of the vehicle determined.

Advantageously, the system for determining the state of a vehicle according to the invention allows optimization of the power consumption by at least one electronic device which can be installed on-board the vehicle, in particular a device which can be installed following wiring of the vehicle, whereby it is not possible to provide a physical connection with an-board signal indicating the operating state of the thermal engine.

In a condition where the system for determining the state of the vehicle detects that the vehicle engine is not in operation, the electronic device is set to standby so that its power consumption is reduced.

In a condition where the system for determining the state of the vehicle detects that the vehicle engine is in operation, the electronic device is set to full power so that it is able to carry out its functions.

The system for determining the state of the vehicle is programmed in an optimized manner for recognition of the actuating transitions of the engine (namely the transitions between a non-operative engine state and an operative engine state), in order to minimize further the power consumption by the on-board electronic devices in the event of false detection of the aforementioned engine actuation transitions.

Further characteristic features and advantages of the invention will be explained more clearly in the following detailed description of a non-limiting example thereof, provided with reference to the accompanying drawings in which:

Figure 1 is a block diagram of a system for determining the state of a vehicle according to the invention, associated with a plurality of on-board electronic devices;
Figure 2 is a flow diagram illustrating an example of the operating conditions of the system according to Figure 1;
Figure 3 is a flow diagram of the method for determining the state of a vehicle according to the invention; and
Figure 4 shows two diagrams indicating the variable detected by the sensor means of the system for determining the state of a vehicle according to the invention in (a) a non-operative engine condition and (b) in an operative engine condition, respectively.

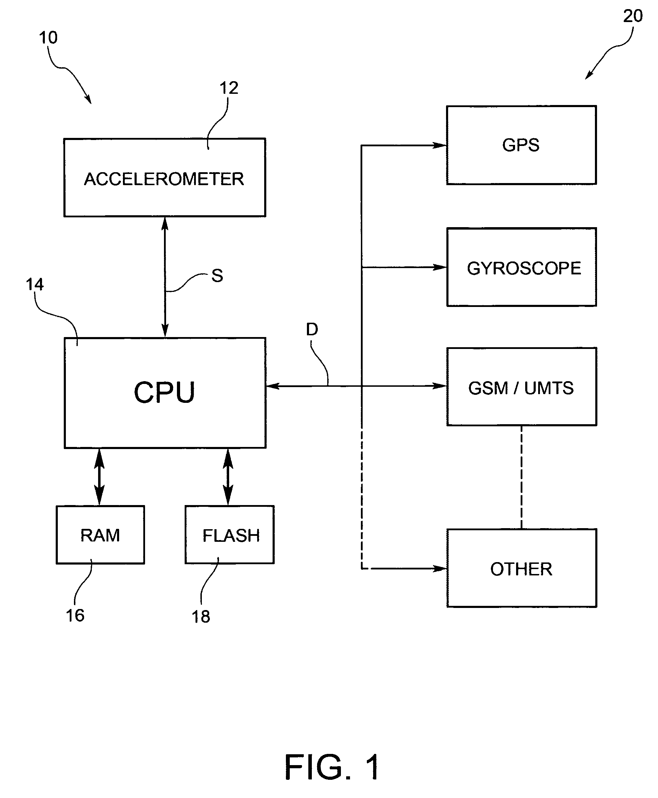

With reference to Figure 1 this illustrates in simplified form a system 10 for determining the state of a vehicle according to the invention, associated with a plurality of on-board electronic devices.

The system 10 comprises sensor means 12, for example a triaxial accelerometer sensor conveniently mounted integrally with the vehicle. In the case where the accelerometer sensor is incorporated in an on-board electronic device, the device is installed integrally with the vehicle. For example, the accelerometer sensor is attached to the windscreen via adhesive or suction-cup means or is rigidly connected to the chassis by means of mounting brackets.

A processing and control unit 14 is connected to the sensor means 12 so as to receive from them a signal indicating the observed variable or its variation over time, for example a signal S indicating the accelerations imparted to the accelerometer sensor by the vibrations of the thermal engine as a result of its operation.

The processing and control unit 14 is connected to one or more memory modules, for example a RAM memory module 16 and a Flash memory module 18, which are adapted to store respectively the measurement data of the variable observed, received via the signal S emitted by the sensor means, and the programming instructions for determining the state of the vehicle from the data representative of the variable observed.

The processing and control unit 14 is arranged to emit command signals D for activating or deactivating associated on-board electronic devices, which are denoted overall by 20, for example a satellite positioning signal receiver of a navigation system, an inertial sensor (triaxial gyroscope) of a system for controlling the dynamics of the vehicle and an on-board radio communication system.

The sensor means may be powered by means of a respective connection to the vehicle battery or by means of an independent battery or also by means of the connection to the processing and control unit.

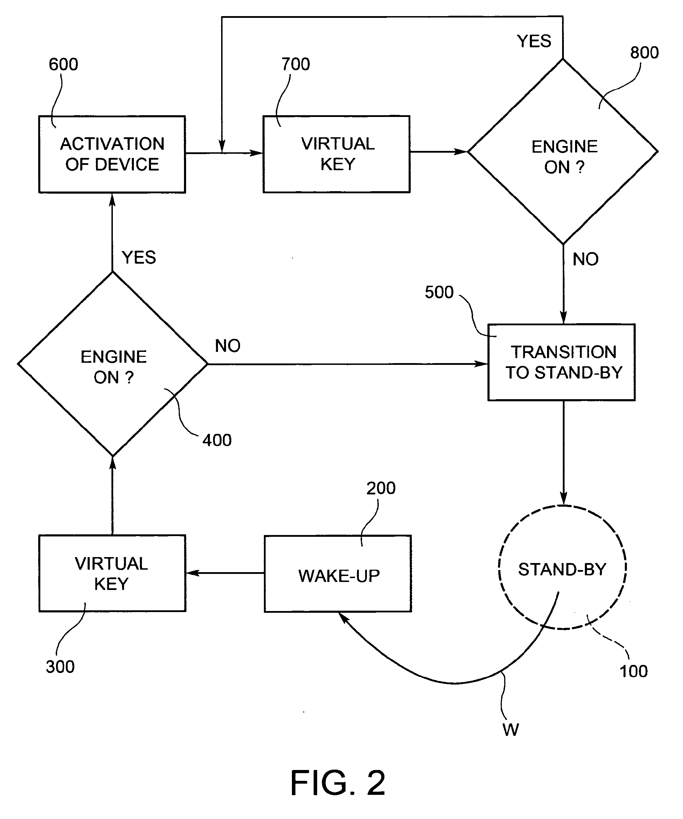

With reference to Figure 2 below an example of a flow sequence of the operating conditions of the system 10 for determining the state of a vehicle according to the invention is discussed.

A low-power standby condition (or sleep condition), where the sensor means 12 and the processing and control unit 14 are inactive, although sensitive to predefined wake-up conditions, is denoted by 100.

A wake-up event W, caused by a vibration (an acceleration or a displacement) imparted to the sensor means causes complete activation of the sensor means (which pass from the standby condition into the fully operative condition) and the processing and control unit, the latter being indirectly woken up by the sensor means.

In a preferred embodiment, waking-up of the processing and control unit is programmed by defining a wake-up interrupt signal which is emitted by the sensor means. To ensure suitable reliability and detection efficiency the accelerometer sensor is a triaxial sensor and the detection threshold (which can be configured) ranges preferably between 200 and 400 mG, a value which balances in an optimum manner the sensitivity of the accelerometer and its rejection of false alarms. Such a sensor is able to generate a wake-up interrupt signal if the acceleration along any axis exceeds the detection threshold. In fact, the definition of a threshold value lower than 200 mG could generate an undesirable number of false detections of start-up of the engine, while the definition of a threshold value greater than 400 mG would not be sufficiently sensitive to generate a timely wake-up signal upon start-up of the vehicle.

It should be noted that the vibration may be generated by actuation of the thermal engine, and therefore last for a significant amount of time, or may be generated by a spurious event not linked with the thermal engine, for example a sudden displacement of air caused in the vicinity of the parked vehicle or an impact with the parked vehicle, and therefore not be repeated over time.

At the end of the wake-up process 200, the processing and control unit executes in step 300 a predetermined computing algorithm for recognizing an operating condition of the thermal engine, referred to below as "virtual key algorithm" which will be described in detail in the continuation of this description. In particular, it performs the calculation of a cumulative variable representing the accelerations detected by the accelerometer sensor 12 in a predetermined time interval.

During a subsequent verification step 400, the processing and control unit compares the value of the cumulative variable calculated in step 300 with a predetermined threshold value.

If the outcome of the comparison establishes that actuation of the engine has not been detected, the processing and control unit in step 500 commands switching of itself and the sensor means 12 to the standby state 100, from where it can then be again woken up.

In the case where the outcome of the comparison establishes that actuation of the engine has been detected, the processing and control unit in step 600 commands issuing one or more signals D for activating the on-board electronic devices connected to it. Then the processing and control unit is set to execute again in step 700 the predetermined computing algorithm for recognizing the actuation condition of the thermal engine, in a similar manner to that performed in step 300, and during a subsequent verification step 800 the processing and control unit compares the value of the cumulative variable calculated in step 300 with the predetermined threshold value (in a similar manner to that performed in step 400).

If the outcome of the comparison determines a state of actuation of the engine, namely a prolonged state of actuation of the engine, the processing and control unit carries out again a calculation and verification cycle (steps 700 and 800).

If the outcome of the comparison establishes that the engine is (no longer) operating, the processing and control unit in step 500 commands switching of itself and the sensor means 12 into the standby state 100, from where it can then be again woken up.

It should be noted that in step 100 the system is in a standby mode (processing unit and sensor means on standby, on-board devices switched off) so that the power consumption is reduced to a minimum. Steps 200-600 are performed in a low-power condition, in which only the processing unit and the sensor means are activated to full power, but they perform a preliminary check (virtual key algorithm), so that the on-board devices are still switched off, so that the power consumption is any case limited. Steps 700 and 800 are performed in a power consumption condition in which both the processing unit and the sensor means as well as the on-board devices are active, but the power required by the system to determine the state of the vehicle and by the devices controlled by it may be supplied by the thermal engine in operation.

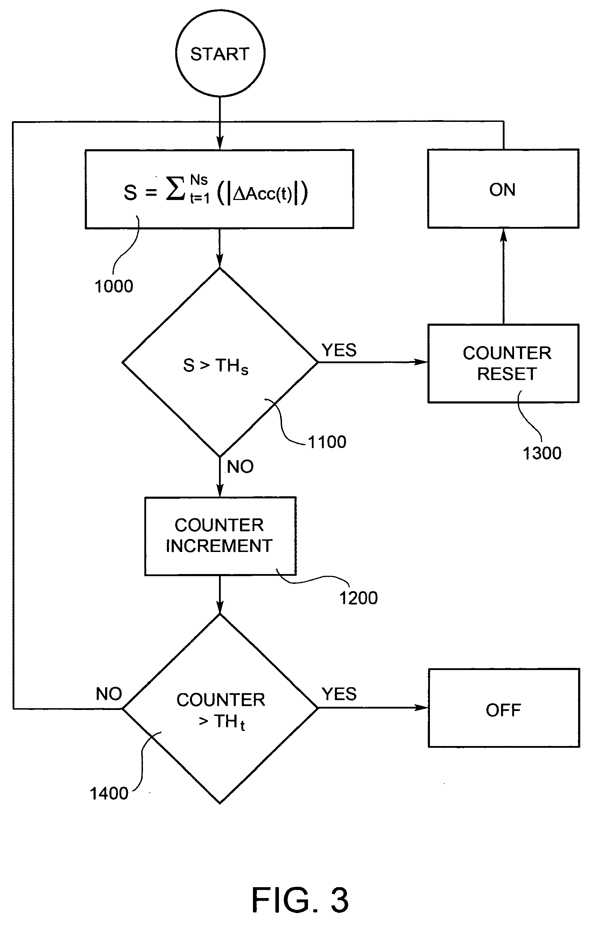

Figure 3 illustrates in detail the calculation steps of the virtual key algorithm carried out by the processing and control unit in steps 300 and 700.

In the example of a preferred embodiment the system for determining the state of the vehicle includes a triaxial accelerometer sensor designed to detect the instantaneous accelerations affecting the engine component or a part (a component or a device) mechanically connected thereto, said accelerations being denoted by $Acc_X$, $Acc_Y$ e $Acc_Z$ (where X, Y and Z are the axes of the accelerometer sensor, but do not necessarily correspond to the axes of the vehicle). The processing and control unit stores a sequence of acceleration data acquired during a predefined time interval, at a sampling frequency f, and calculates in step 1000 a cumulative variable corresponding to the sum S of the absolute values of the acceleration variations for a predetermined number $N_S$ of samples, according to the formula:

$$S = \sum_{t=1}^{Ns} \left( \left| \Delta Acc_X(t) \right| + \left| \Delta Acc_Y(t) \right| + \left| \Delta Acc_Z(t) \right| \right)$$

where the acceleration variations $\Delta Acc(t)$ are for example calculated with reference to the acceleration value acquired at the moment of the preceding sampling operation, using the expression:

$$\Delta Acc(t) = Acc(t) - Acc(t-1)$$

Then, the processing and control unit performs a step 1100 for comparing the calculated value of the cumulative variable S and a predetermined threshold value $TH_S$,

A counter is incremented (step 1200) if the values of the cumulative variable S is less than the threshold value $TH_S$, or reset (step 1300) if the value of the cumulative variable S is greater than the threshold $TH_S$.

With each counter increment it is checked in step 1400 whether it is less than or greater than a predetermined time threshold $TH_t$, so that an operative engine state (ON) is determined if counter value is less than the threshold $TH_t$ and, on the other hand, a non-operative engine state (OFF) is determined if the counter value is greater than the threshold $TH_t$.

Whenever the counter is reset (in step 1300) an operative engine state (ON) is determined.

Advantageously, the computational complexity of the algorithm described is minimal, since the processing and control unit is required to perform simple addition and subtraction operations. The amount of memory used is also small, since only the acceleration measurement data at two successive sampling instants and the progressive value of the cumulative variable must be stored in the memory.

Moreover, since the acceleration values detected are expressed initially in a raw data format of the accelerometer device, the threshold $TH_S$ may also be predefined in the same format, avoiding conversion into G-related (or mG-related) measurement units by means of a scale factor, using the expression:

$$Acc[G] = Acc[raw] * SF$$

reducing further the number of multiplication calculation cycles and amount of memory used.

Further simplifications may also be applied in the case where the sensor means are of another type, for example position sensor means (gyroscope), while still expressing the predetermined threshold values needed for execution of the virtual key algorithm in the same measurement units as the raw data supplied by the sensor (or sensors).

Obviously, if the simplicity of the system or the minimization of memory and computational resources is not a binding constraint, but accuracy in detection of the vehicle state is more important, the system according to the invention may include simultaneously different types of sensor means and process the data supplied by each of them, if necessary within a greater time span and using more sophisticated procedures (calculation of the arithmetic mean, etc.).

It should be noted that the configuration of the parameters mentioned above (sampling frequency f, number of samples $N_S$, thresholds $TH_S$, $TH_t$) is important for reliable detection of the state of the vehicle and for tuning the system depending on the specific application required.

The sampling frequency f should be sufficiently high to be able to detect the vibrations of the thermal engine and the movement of the vehicle. Experimentally, a minimum value of the sampling frequency of the order of 10 Hz has been defined, but greater values help to improve the efficiency of the algorithm.

The number of samples NS must be preferably selected so that the sum of the differential acceleration values be significantly divergent between the operative engine condition (ON) and the non-operative engine condition (OFF). A minimum of 10 samples should be used and larger numbers of samples may improve the discrimination between the ON state and the OFF state.

The threshold $TH_S$ for determining the operative engine state should be defined at a value such that the value S of the cumulative variable is less than said threshold when the engine is not operative.

The threshold $TH_t$ used to detect an ON-OFF transition represents the number of times the value of the cumulative variable S must be less than the threshold $TH_S$ in order to cause a transition to the non-operative engine state. The threshold $TH_t$ may be configured for rapid recognition of a transition (in order to reduce to a minimum the power consumption of the controlled devices) or more careful recognition of a transition (to avoid errors). In the latter case, a time period of 60 seconds is preferable.

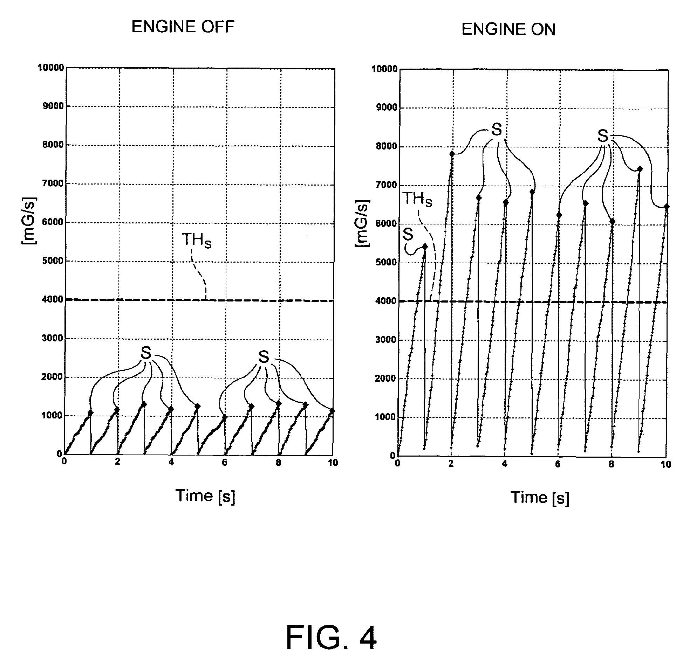

Figure 4 shows an example of execution of the virtual key algorithm, in which the sampling frequency is 40 Hz, the number $N_S$ of samples is 40, the threshold $TH_S$ is set to 4000 mG/s and the threshold $TH_t$ is set to 10 seconds.

The example illustrates the difference in values taken by the cumulative variable S in the non-operative engine condition (OFF state, diagram (a)) and operative engine condition (ON state, diagram (b)). Suitable calibration of the threshold $TH_S$ allows reliable discrimination between the ON state and OFF state.

Obviously, the values suggested are not binding. For example, rapid state transition and deactivation of the on-board devices controlled as soon as it established that the engine is not operative may be required, thus subjecting the system to alternating requests for deactivation and activation, if a very small number of samples is used to estimate the operative condition of the thermal engine.

Advantageously, the system for determining the state of the vehicle according to the present invention carries out a check during the course of a presumed OFF-ON state transition (wake-up) before performing activation of the on-board controlled devices, execution of this check being prolonged for a predefined period of time set so that it is possible to take account of possible spurious vibrations, for example due to the sudden displacements of air caused by the passing by of another vehicle close by.

It should be noted that the embodiment proposed for the present invention in the above description is intended to be a purely non-limiting example of the present invention. A person skilled in the art may easily implement the present invention in different embodiments which do not, however, depart from the principles illustrated here and are therefore included within the present patent.

This applies in particular as regards the possibility of using the system and performing the method according to the invention on hybrid vehicles and on vehicles with functions for temporarily stopping the engine (so-called start-stop function). The hybrid vehicles and the vehicles with functions for temporary stoppage of the engine are not subject to the typical vibrations induced by a thermal engine during operation, so they might not allow correct execution of the virtual key algorithm, not recognizing a temporary stopped condition of the vehicle, but interpreting this event in a similar manner to an ON-OFF transition event. A solution for solving this problem is that of suitably setting the level of the threshold $TH_t$ of the virtual key algorithm, so as to take account of the case where a vehicle may stop moving temporarily for a certain number of seconds, for example a number of seconds corresponding to the duration of a traffic light stop signal.

Obviously, without affecting the principle of the invention, the embodiments and the constructional details may be greatly modified with respect to that described and illustrated purely by way of a non-limiting example, without thereby departing from the scope of the invention as defined in the accompanying claims.

**Claims**

1.   Method for determining the state of a vehicle equipped with a thermal engine and for controlling the actuation of an on-board electronic device,
comprising the steps of:

- detecting a quantity representative of the vibrations of the thermal engine of the vehicle as a result of its operation;
- determining a state of actuation of the engine depending on the values assumed by said detected quantity; and
- issuing a command signal for the activation or deactivation, respectively, of said on-board device depending on the determined state of actuation of the engine, wherein the vibration of the thermal engine of the vehicle is detected by means of acquisition of a measured variable of an inertial sensor integral with the thermal engine or associated with a part mechanically connected thereto,

**characterized in that** it comprises the steps of:

- within a specified time span, acquiring a plurality of values of the measured variable of the inertial sensor;
- calculating a cumulative value representative of variations of said measured variable occurring at a predetermined number of sampling instants;
- comparing said cumulative value with a predetermined threshold value;
- incrementing a counter if said cumulative value is less than said predetermined threshold value, or resetting the counter if said cumulative value is greater than said predetermined threshold value;
- checking whether said counter is less than or greater than a predetermined time threshold,

whereby an actuation condition of the thermal engine (ON) is determined if the counter value is less than said time threshold, or a non-actuation condition of the thermal engine (OFF) is determined if the counter value is greater than said time threshold.

2.   Method according to Claim 1, wherein the detection of said quantity representative of the vibration of the thermal engine of the vehicle is triggered by a wake-up event.

3.   Method according to Claim 2, wherein a wake-up check is performed, prolonged for a predefined period of time.

4.   Method according to Claim 1, wherein the occurrence of a transition of the state of the vehicle, from a condition of non-actuation of the thermal engine to an actuation condition of the thermal engine, causes the issue of a command signal for activation of said on-board device.

**5.** Method according to Claim 1, wherein the occurrence of a transition of the state of the vehicle, from an actuation condition of the thermal engine to a non-actuation condition of the thermal engine, causes the issue of a command signal for deactivation of said on-board device.

**6.** Method according to Claim 1, wherein resetting of the counter determines an actuation condition of the thermal engine.

**7.** System for determining the state of a vehicle equipped with a thermal engine and for controlling the actuation of an electronic device which can be installed on-board said vehicle, comprising:

- inertial sensor means arranged for detecting a quantity representative of vibrations of the thermal engine as a result of its operation, and
- processing and control means which are connected to said sensor means for receiving therefrom a signal representative of the observed quantity or its variation over time and which are arranged for:

determining a state of actuation of the engine depending on the values taken by said quantity detected by the sensor means; and
issuing a command signal for activation and deactivation, respectively, of said on-board device depending on the determined state of actuation of the engine,

**characterized in that** said sensor means are arranged for acquiring a plurality of measured values within a predetermined time span,
and said processing and control means are arranged for:

- calculating a cumulative value representative of variations of said measured quantity occurring at a predetermined number of sampling instants;
- comparing said cumulative value with a predetermined threshold value;
- incrementing a counter if said cumulative value is less than said predetermined threshold value, or resetting the counter if said cumulative value is greater than said predetermined threshold value;
- checking whether said counter is less than or greater than a predetermined time threshold, and
- determining an actuation condition of the thermal engine (ON) if the counter value is less than said time threshold, or determining a non-actuation condition of the thermal engine (OFF) if the counter value is greater than said time threshold.

**8.** System according to Claim 7, adapted to take a low-power standby condition in which said sensor means and said processing and control means are inactive and sensitive to predefined wake-up commands.

**9.** System according to Claim 8, wherein said sensor means are arranged for switching to a wake-up condition after a verification of said wake-up commands, prolonged for a predefined period of time.

**10.** System according to Claim 9, wherein said inertial sensor means comprise accelerometer sensor means, arranged for generating a signal for waking up said processing and control means when the acceleration detected exceeds a predetermined detection threshold.

**11.** System according to Claim 10, wherein said accelerometer sensor means comprise at least one accelerometer sensor with a configurable detection threshold.

**12.** System according to Claim 10 or 11, wherein said accelerometer sensor means comprise at least a triaxial accelerometer sensor whose detection threshold is between 200 and 400 mG.

**13.** System according to any one of Claims 7 to 12, wherein said inertial sensor means are integral with the thermal engine or associated with a part mechanically connected thereto.

**14.** On-board telematic platform for a vehicle equipped with a thermal engine, comprising a system for determining the state of the vehicle and for controlling the actuation of said platform according to any one of Claims 7 to 13.

**Patentansprüche**

1. Verfahren zum Bestimmen des Zustandes eines mit einer Wärmekraftmaschine ausgestatteten Fahrzeugs und zum Steuern der Betätigung einer elektronischen Bordvorrichtung, folgende Schritte beinhaltend:

   - Erkennen einer für die Schwingungen der Wärmekraftmaschine des Fahrzeugs als Folge ihres Betriebs repräsentativen Größe;
   - Bestimmen eines Zustandes der Betätigung der Maschine abhängig von den von der erkannten Größe angenommenen Werten; und
   - Ausgeben eines Kommandosignals für die Aktivierung bzw. Deaktivierung der Bordvorrichtung abhängig von dem bestimmten Zustand der Betätigung der Maschine, wobei die Schwingungen der Wärmekraftmaschine des Fahrzeugs mittels Erfassung einer gemessenen Variablen eines Trägheitssensors, der Teil der Wärmekraftmaschine ist oder mit einem Teil, der mit ihr mechanisch verbunden ist, in Beziehung steht, erkannt werden,

   **dadurch gekennzeichnet ist, dass** es folgende Schritte beinhaltet:

   - Erfassen, innerhalb einer vorgeschriebenen Zeitspanne, einer Vielzahl von Werten der gemessenen Variablen des Trägheitssensors;
   - Berechnen eines kumulativen Wertes, der für Änderungen der gemessenen Variablen, die an einer vorgegebenen Zahl von Abtastzeitpunkten auftreten, repräsentativ ist;
   - Vergleichen des kumulativen Wertes mit einem vorgegebenen Schwellenwert;
   - Hochsetzen eines Zählers, falls der kumulative Wert niedriger als der vorgegebene Schwellenwert ist, oder Zurücksetzen des Zählers, falls der kumulative Wert höher als der vorgegebene Schwellenwert ist;
   - Prüfen, ob der Zählerstand niedriger oder höher als eine vorgegebene Zeitschwelle ist,
   - wodurch eine Betätigungsbedingung der Wärmekraftmaschine (ON) bestimmt wird, falls der Zählerwert niedriger als die Zeitschwelle ist, oder eine Nichtbetätigungsbedingung der Wärmekraftmaschine (OFF) bestimmt wird, falls der Zählerwert höher als die Zeitschwelle ist.

2. Verfahren nach Anspruch 1, wobei die Erkennung der für die Schwingungen der Wärmekraftmaschine des Fahrzeugs repräsentativen Größe durch ein Weck-Ereignis ausgelöst wird.

3. Verfahren nach Anspruch 2, wobei eine Weckkontrolle, verlängert für einen vordefinierten Zeitraum, durchgeführt wird.

4. Verfahren nach Anspruch 1, wobei das Auftreten eines Übergangs des Zustandes des Fahrzeugs von einer Bedingung der Nichtbetätigung der Wärmekraftmaschine in eine Betätigungsbedingung der Wärmekraftmaschine die Ausgabe eines Kommandosignals zur Aktivierung der Bordvorrichtung bewirkt.

5. Verfahren nach Anspruch 1, wobei das Auftreten eines Übergangs des Zustandes des Fahrzeugs von einer Betätigungsbedingung der Wärmekraftmaschine in eine Nichtbetätigungsbedingung der Wärmekraftmaschine die Ausgabe eines Kommandosignals zur Deaktivierung der Bordvorrichtung bewirkt.

6. Verfahren nach Anspruch 1, wobei das Zurücksetzen des Zählers eine Betätigungsbedingung der Wärmekraftmaschine bestimmt.

7. System zum Bestimmen des Zustandes eines mit einer Wärmekraftmaschine ausgestatteten Fahrzeugs und zum Steuern der Betätigung einer elektronischen Vorrichtung, die an Bord des Fahrzeugs installiert werden kann, aufweisend:

   - Trägheitssensormittel, die für das Erkennen einer für Schwingungen der Wärmekraftmaschine als Folge ihres Betriebs repräsentativen Größe angeordnet sind, und
   - Verarbeitungs- und Steuerungsmittel, die an die Sensormittel angeschlossen sind, um von ihnen ein Signal zu empfangen, das für die beobachtete Größe oder ihre Änderung über die Zeit repräsentativ ist, und die angeordnet sind für das:
   - Bestimmen eines Zustandes der Betätigung der Maschine abhängig von den Werten, die von der durch die Sensormittel erkannten Größe angenommen wurden; und
   - Ausgeben eines Kommandosignals für die Aktivierung bzw. Deaktivierung der Bordvorrichtung abhängig von dem bestimmten Zustand der Betätigung der Maschine,

- **dadurch gekennzeichnet, dass** die Sensormittel für das Erfassen einer Vielzahl gemessener Werte innerhalb einer vorgegebenen Zeitspanne angeordnet sind,

- und die Verarbeitungs- und Steuerungsmittel angeordnet sind für das:

- Berechnen eines kumulativen Wertes, der für Änderungen der gemessenen Größe, die an einer vorgegebenen Zahl von Abtastzeitpunkten auftreten, repräsentativ ist;

- Vergleichen des kumulativen Wertes mit einem vorgegebenen Schwellenwert;

- Hochsetzen eines Zählers, falls der kumulative Wert niedriger als der vorgegebene Schwellenwert ist, oder Zurücksetzen des Zählers, falls der kumulative Wert höher als der vorgegebene Schwellenwert ist;

- Prüfen, ob der Zählerstand niedriger oder höher als eine vorgegebene Zeitschwelle ist, und

- Bestimmen einer Betätigungsbedingung der Wärmekraftmaschine (ON), falls der Zählerwert niedriger als die Zeitschwelle ist, oder Bestimmen einer Nichtbetätigungsbedingung der Wärmekraftmaschine (OFF), falls der Zählerwert höher als die Zeitschwelle ist.

8. System nach Anspruch 7, gestaltet, um in eine energiesparende Bereitschaftsbedingung zu treten, in welcher die Sensormittel und die Verarbeitungs- und Steuerungsmittel inaktiv und für vordefinierte Weckkommandos empfindlich sind.

9. System nach Anspruch 8, wobei die Sensormittel für das Schalten in eine Weckbedingung nach einer Prüfung der Weckkommandos, verlängert für einen vordefinierten Zeitraum, angeordnet sind.

10. System nach Anspruch 9, wobei die Trägheitssensormittel Beschleunigungssensormittel aufweisen, die für das Erzeugen eines Signals zum Wecken der Verarbeitungs- und Steuerungsmittel, wenn die erkannte Beschleunigung eine vorgegebene Erkennungsschwelle überschreitet, angeordnet sind.

11. System nach Anspruch 10, wobei die Beschleunigungssensormittel mindestens einen Beschleunigungssensor mit einer konfigurierbaren Erkennungsschwelle aufweisen.

12. System nach Anspruch 10 oder 11, wobei die Beschleunigungssensormittel mindestens einen triaxialen Beschleunigungssensor aufweisen, dessen Erkennungsschwelle zwischen 200 und 400 mG liegt.

13. System nach einem der Ansprüche 7 bis 12, wobei die Trägheitssensormittel Teil der Wärmekraftmaschine sind oder mit einem Teil, der mit ihr mechanisch verbunden ist, in Beziehung stehen.

14. Telematische Bordplattform für ein mit einer Wärmekraftmaschine ausgestattetes Fahrzeug, ein System zum Bestimmen des Zustandes des Fahrzeugs und zum Steuern der Betätigung der Plattform nach einem der Ansprüche 7 bis 13 aufweisend.

## Revendications

1. Procédé pour déterminer l'état d'un véhicule équipé d'un moteur thermique et pour commander l'activation d'un dispositif électronique embarqué,

comprenant les étapes consistant à :

- détecter une quantité représentative des vibrations du moteur thermique du véhicule résultant de son fonctionnement ;

- déterminer un état d'activation du moteur en fonction des valeurs prises par ladite quantité détectée ; et

- émettre un signal de commande pour l'activation ou la désactivation, respectivement, dudit dispositif embarqué en fonction de l'état déterminé d'activation du moteur, dans lequel la vibration du moteur thermique du véhicule est détectée au moyen de l'acquisition d'une variable mesurée d'un capteur d'inertie solidaire du moteur thermique ou associé à une partie mécaniquement connectée à celui-ci,

**caractérisé en ce qu'**il comprend les étapes consistant à :

- dans un laps de temps donné, acquérir une pluralité de valeurs de la variable mesurée du capteur d'inertie ;

- calculer une valeur cumulée représentative des variations de ladite variable mesurée se produisant à un nombre prédéterminé d'instants d'échantillonnage ;

- comparer ladite valeur cumulée avec une valeur seuil prédéterminée ;
- incrémenter un compteur si ladite valeur cumulée est inférieure à ladite valeur de seuil prédéterminée, ou réinitialiser le compteur si ladite valeur cumulée est supérieure à ladite valeur de seuil prédéterminée ;
- vérifier si ledit compteur est inférieur ou supérieur à un seuil de temps prédéterminé,

moyennant quoi une condition d'activation du moteur thermique (ON) est déterminée si la valeur du compteur est inférieure audit seuil de temps, ou une condition de non-activation du moteur thermique (OFF) est déterminée si la valeur du compteur est supérieure audit seuil de temps.

2. Procédé selon la revendication 1, dans lequel la détection de ladite quantité représentative de la vibration du moteur thermique du véhicule est déclenchée par un événement de réveil.

3. Procédé selon la revendication 2, dans lequel un contrôle de réveil est effectué, prolongé pendant une période de temps prédéfinie.

4. Procédé selon la revendication 1, dans lequel l'apparition d'une transition de l'état du véhicule, d'une condition de non-activation du moteur thermique à une condition d'activation du moteur thermique, provoque l'émission d'un signal de commande pour l'activation dudit dispositif embarqué.

5. Procédé selon la revendication 1, dans lequel l'apparition d'une transition de l'état du véhicule, d'un état d'activation du moteur thermique à une condition de non-activation du moteur thermique, provoque l'émission d'un signal de commande pour désactiver ledit dispositif embarqué.

6. Procédé selon la revendication 1, dans lequel la réinitialisation du compteur détermine une condition d'activation du moteur thermique.

7. Système pour déterminer l'état d'un véhicule équipé d'un moteur thermique et pour commander l'activation d'un dispositif électronique qui peut être installé à bord dudit véhicule, comprenant :

- des moyens de détection inertiels agencés pour détecter une quantité représentative de vibrations du moteur thermique résultant de son fonctionnement, et
- des moyens de traitement et de commande qui sont reliés auxdits moyens de détection pour en recevoir un signal représentatif de la quantité observée ou de sa variation dans le temps et qui sont agencés pour :

la détermination d'un état d'activation du moteur en fonction des valeurs prises par ladite quantité détectée par le moyen de détection ; et
l'émission d'un signal de commande d'activation et de désactivation, respectivement, dudit dispositif embarqué en fonction de l'état déterminé de l'activation du moteur, **caractérisé en ce que** lesdits moyens de détection sont agencés pour acquérir une pluralité de valeurs mesurées dans un laps de temps prédéterminé,

et lesdits moyens de traitement et de commande sont agencés pour :

- calculer une valeur cumulée représentative des variations de ladite quantité mesurée se produisant à un nombre prédéterminé d'instants d'échantillonnage ;
- comparer ladite valeur cumulée à une valeur de seuil prédéterminée ;
- incrémenter un compteur si ladite valeur cumulée est inférieure à ladite valeur de seuil prédéterminée, ou réinitialiser le compteur si ladite valeur cumulée est supérieure à ladite valeur de seuil prédéterminée ;
- vérifier si ledit compteur est inférieur ou supérieur à un seuil de temps prédéterminé, et
- déterminer une condition d'activation du moteur thermique (ON) si la valeur du compteur est inférieure audit seuil de temps, ou déterminer une condition de non-activation du moteur thermique (OFF) si la valeur du compteur est supérieure audit seuil de temps.

8. Système selon la revendication 7, adapté pour prendre un état d'attente à faible puissance dans lequel lesdits moyens de détection et lesdits moyens de traitement et de contrôle sont inactifs et sensibles aux commandes de réveil prédéfinies.

9. Système selon la revendication 8, dans lequel lesdits moyens de détection sont agencés pour passer à un état de réveil après une vérification desdites commandes de réveil, prolongée pendant une période de temps prédéfinie.

10. Système selon la revendication 9, dans lequel lesdits moyens de détection inertiels comportent des moyens de détection d'accéléromètre, agencés pour générer un signal pour réveiller lesdits moyens de traitement et de commande lorsque l'accélération détectée dépasse un seuil de détection prédéterminé.

11. Système selon la revendication 10, dans lequel lesdits moyens de capteur d'accéléromètre comprennent au moins un détecteur d'accéléromètre avec un seuil de détection configurable.

12. Système selon la revendication 10 ou 11, dans lequel lesdits moyens de capteur d'accéléromètre comprennent au moins un capteur d'accéléromètre triaxial dont le seuil de détection est compris entre 200 et 400 mG.

13. Système selon l'une quelconque des revendications 7 à 12, dans lequel lesdits moyens de capteurs inertiels sont solidaires du moteur thermique ou associés à une pièce reliée mécaniquement à celui-ci.

14. Plateforme télématique embarquée pour un véhicule équipé d'un moteur thermique, comprenant un système de détermination de l'état du véhicule et pour commander l'activation de ladite plate-forme selon l'une quelconque des revendications 7 à 13.

FIG. 1

**FIG. 2**

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1978490 A